# EUROPEAN PATENT SPECIFICATION

(11) **EP 2 605 512 B1**
(45) Date of publication and mention of the grant of the patent: **18.04.2018**
(21) Application number: 11816561.2
(22) Date of filing: 03.08.2011
(51) Int. Cl.: H04N 5/44, H04N 5/445, H04N 21/4788

(54) **METHOD FOR INPUTTING DATA ON IMAGE DISPLAY DEVICE AND IMAGE DISPLAY DEVICE THEREOF**
VERFAHREN ZUR DATENEINGABE IN EINE BILDANZEIGEVORRICHTUNG UND BILDANZEIGEVORRICHTUNG
PROCÉDÉ DE SAISIE DE DONNÉES SUR UN DISPOSITIF D'AFFICHAGE D'IMAGE, ET DISPOSITIF D'AFFICHAGE D'IMAGE ASSOCIÉ

(30) Priority: 13.08.2010 KR 20100078127
(43) Date of publication of application: 19.06.2013
(73) Proprietor: LG Electronics Inc., Yeongdeungpo-gu Seoul 150-721 (KR)
(72) Inventor: RHEE, Joohyun, Pyeongtaek-si Gyeonggi-do 451-731 (KR); HWANG, Sunjung, Pyeongtaek-si Gyeonggi-do 451-731 (KR)
(74) Representative: Gunzelmann, Rainer
(86) International application number: PCT/KR2011/005695
(87) International publication number: WO 2012/020945

(56) References cited:
- EP-A1- 1 591 876
- EP-A2- 1 717 686
- JP-A- 11 075 113
- KR-A- 20070 035 328
- KR-A- 20090 046 159
- KR-A- 20100 071 620
- US-A1- 2003 223 093
- US-A1- 2007 061 299
- US-A1- 2009 265 737
- US-A1- 2009 293 079
- HEWLETT-PACKARD COMPANY: "HP Media Center PC User's Guide", USER GUIDE HEWLETT PACKARD, XX, XX, 1 January 2003 (2003-01-01), pages 1-232, XP002378322,

## Description

### Field of the Invention

The present invention relates to a method for inputting data on an image display device and an image display device adopting the same and, more particularly, to a method for inputting data on an image display device and an image display device adopting the same that can input text or images more easily and more conveniently.

### Background Art

An image display device corresponds to a device being equipped with a function of displaying images that can be viewed by a user. The user may view broadcast programs through the image display device. Among broadcast signals being transmitted from a broadcast station, the image display device displays a broadcast program (or service) selected by the user on a display screen. Current broadcasting is internationally being converted from analog broadcasting to digital broadcasting.

Herein, digital broadcasting refers to a broadcasting method transmitting digital video and audio signals. As compared to video signals, being robust against external noise, digital broadcasting undergo less data loss, is advantageous in performing error correction, has greater resolution, and provides a more vivid display screen. Additionally, unlike analog broadcasting, digital broadcasting may perform two-way (or bi-directional) communication, and an EPG (Electronic Program Guide), which provides information on a broadcast program as a data service, may be provided as an essential (or basic) service.

Meanwhile, recently, smart TVs performing a combination of the functions of an image display device and functions of a multimedia device, are being spotlighted as prominent smart TV models.

Such smart TVs correspond to intelligent user equipments having computer-supported functions, such as internet communication, information search, and so on, added to an image display device. Herein, as compared to the conventional image display device, a high capacity memory and a high performance CPU (Central Processing Unit) are equipped in the smart TV, and an operating system (OS) for supporting the execution of diverse applications, voice/data communication, and interoperability with PCs (Personal Computers) is also equipped in the smart TV. By using such smart TV, the user may be capable of freely using services through the internet, unlike when using the conventional image display device. Most particularly, one of the main characteristics of the smart TV is that the user may download a wanted application from an external source and may install the downloaded application in the smart TV.

In case the related art image display device uses diverse services or applications, as described above, and when the image display device performs a predetermined amount of data input, since an adequate user input means does not exist, the user may experience inconvenience in inputting a predetermined amount of text.

Therefore, it is imperative to devise a method for inputting text or imagers in an image display device and an image display device using the same, by resolving the problems lying in the related art image display device, so that diverse functions of the image display device and diverse applications can be easily and conveniently used.

US 2009/293079 A1 discloses a technique for extending social networking to television viewing. A community of a plurality of users is created, wherein each user is logged in a device configured to present audio-video content. Presence information of one of the users in the community is determined and transmitted to a corresponding device of another one of the users.

US 2009/265737 A1 discloses systems and methods for obtaining key frames of video content items being viewed by first users and publishing the key frames of the video content items to second users are provided. In general, either prior to playback of a video content item by a first user or during playback of the video content item by the first user, key frame information providing, referencing, or identifying key frames of the video content item is obtained. Each key frame is representative of a segment of the video content item. The key frame information for the video content item is then published such that each key frame is presented to one or more second users while the first user views the corresponding segment of the video content item.

Document HEWLETT-PACKARD COMPANY: "HP Media Center PC User's Guide", USER GUIDE HEWLETT PACKARD, XX, XX, 1 January 2003, pages 1-232, discloses a user guide for a media center personal computer.

US 2007/061299 A1 concerns a mobile phone comprising service searching means which extract a keyword(s) from program information regarding the program currently reproduced in the mobile phone, and searches a service registration database for all titles and addresses of message exchange system associated with the keyword(s). Menu displaying means display a list of the acquired title(s) in a display. Further, the service searching means receive data for causing the mobile phone to function as a terminal device of the message exchange system selected by the user, allowing the user to immediately access the message exchange system. EP 1591876 A1 discloses a menu selection method for the ordering of television channels wherein a list item may be selected by moving a focus or by entering a number associated with the desired item.

### Detailed Description of the Invention

### Technical Objects

A technical object of the present invention is to resolve the above-described problems lying in the related art, so as to provide a method for inputting text in an image display device and an image display device adopting the same, wherein a user may easily input an intended text through the image display device.

Additionally, another technical object of the present invention is to provide a method for inputting image data in an image display device and an image display device adopting the same, wherein a user may select a predetermined section of a display screen of the image display device and input the corresponding image data in a message input window.

### Technical Solutions

Some all of the above problems are overcome by a text inputting method in an image display device according to claim 1, or an image display device having a text input function according to claim 7.

### Effects of the Invention

The method for inputting text in an image display device and an image display device of the same according to an exemplary embodiment of the present invention may enable the user to simply input a predetermined amount of text in the image display device without any complicated maneuver.

Additionally, the method for inputting text in an image display device and an image display device of the same according to an exemplary embodiment of the present invention may enable the user to input information included in an EPG, which is included in a digital broadcast signal, by inputting a predetermined number key in a text input window. Thus, the user may easily use the information included in the EPG.

Moreover, the method for inputting text in an image display device and an image display device of the same according to an exemplary embodiment of the present invention may enable the user to easily input a predetermined section of a display screen of a content, which is currently being outputted, in the message input window. Thus, the user may accurately deliver a portion of the displayed content, which is difficult to describe by merely using text information, in the form of image data more quickly and more easily.

Furthermore, the method for inputting text in an image display device and an image display device of the same according to an exemplary embodiment of the present invention may enable the user to determine information related to a predetermined section of the display screen corresponding to the content, which is currently being outputted, through the EPG or network and then to input the corresponding information. Thus, the user may input a wanted message more conveniently.

### Brief Description of the Drawings

Fig. 1 illustrates a general view of an image display device system according to an exemplary embodiment of the present invention.
Fig. 2 illustrates a block view showing an internal structure of an image display device according to an exemplary embodiment of the present invention.
Fig. 3 illustrates a device that can perform data transmission and reception (or transception) to and from the image display device of Fig. 2.
Fig. 4 to Fig. 5 respectively illustrate diverse exemplary structural views showing a platform of the image display device of Fig. 2.
Fig. 6 illustrates an image showing operations of a remote control device of Fig. 2.
Fig. 7 illustrates a flow chart showing the process steps for inputting a predetermined text according to the exemplary embodiment of the present invention.
Fig. 8 illustrates a flow chart showing detailed process steps for setting up the text input mode of Fig. 7 according to the exemplary embodiment of the present invention.
Fig. 9 illustrates a flow chart showing the process steps for inputting a message according to an exemplary embodiment of the present invention.
Fig. 10 illustrates a flow chart showing detailed process steps for inputting image data of Fig. 9 according to the exemplary embodiment of the present invention.
Fig. 11 illustrates a flow chart showing detailed process steps for inputting image data of Fig. 9 according to another exemplary embodiment of the present invention.
Fig. 12 illustrates a user interface inputting a predetermined text by using an EPG according to an exemplary embodiment of the present invention.
Fig. 13 illustrates a user interface inputting a predetermined section of image data according to an exemplary embodiment of the present invention.
Fig. 14 illustrates a user interface inputting a predetermined section of image data according to another exemplary embodiment of the present invention.

### Best Mode for Carrying Out the Present Invention

Hereinafter, the present invention will now be described in detail with reference to the accompanying drawings.

In the following description of the present invention, the suffixes "module" and "unit" that are mentioned in the elements used to describe the present invention are merely used for the purpose of simplifying the description of the present invention. And, so, the suffix itself is not assigned with a particularly significant meaning or function. Therefore, the suffixes "module" and "unit" may also be alternately used for the reference of a specific element of the present invention.

Meanwhile, the image display device described in the description of the present invention corresponds to, for example, an intelligent image display device that is also equipped with a computer supporting function in addition to the broadcast program receiving function. Accordingly, since the image display device is committed (or devoted) to its broadcast program receiving function and is also supplemented with an internet browsing function, the display apparatus may be equipped with an interface that can be more conveniently used as compared to an hand-writing type input device, a touch screen or a space remote controller. Furthermore, being supported with a wired or wireless (or radio) internet function, the display apparatus may be connected to (or may access) the internet and a computer, thereby being capable of performing email transmission, web browsing, internet banking or gaming functions. In order to perform such variety of functions, the display apparatus may adopt a standardized OS for general purpose.

More specifically, since a variety of applications may be easily added to or deleted from an image display device within an OS kernel for general purpose, the image display device described in the description of the present invention may, for example, be capable of performing a wide range of user-friendly functions. For example, a smart TV may correspond to an example of such image display device.

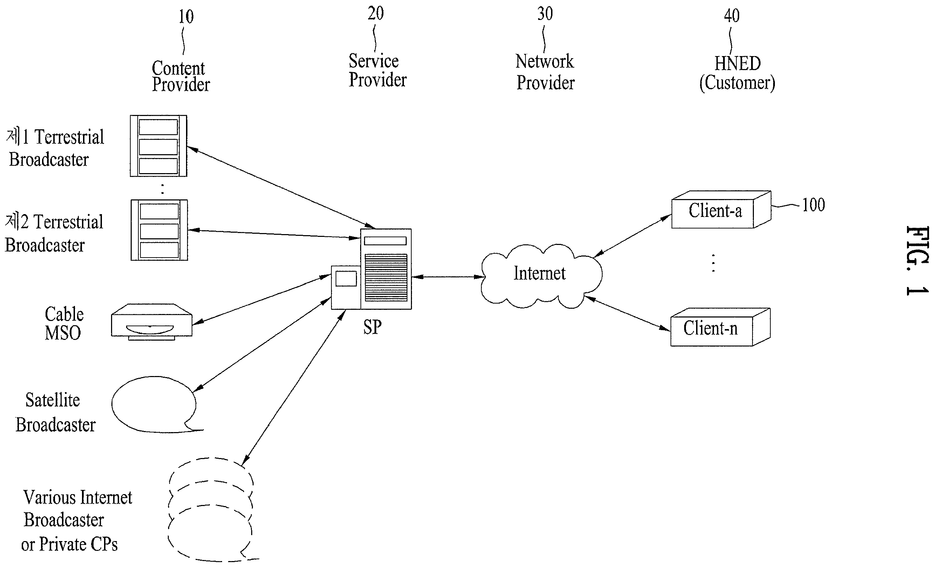

Fig. 1 illustrates a general view of an image display device system according to an exemplary embodiment of the present invention.

Referring to Fig. 1, in light of the aspect of providing contents services with respect to a broadcast transmitter, the image display device system according to the exemplary embodiment of the present invention may be configured of a Content Provider (CP) (10), a Service Provider (SP) (20), a Network Provider (NP) (30), and a Customer (or user) (40).

The content provider (10) produces and provides various types of contents. As shown in FIG. 1, examples of the content provider (10) may include terrestrial broadcasters, cable SOs (System Operators) or MSOs (Multiple System Operators), satellite broadcasters, Internet broadcasters, and so on.

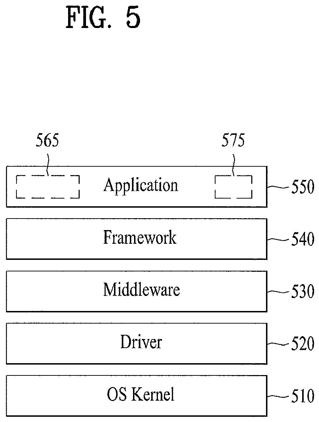

Also, in addition to broadcast contents, the content provider 10 may also provide various types of applications. This will be described in more detail later on with reference to Fig. 5.

The service provider (20) may packetize the contents provided by the content provider (10) into service packages. For example, the service provider (20) of FIG. 1 may packetize a first terrestrial broadcast program, a second terrestrial broadcast program, a cable MSO, satellite broadcast programs, a diversity of internet broadcast programs, applications, and so on into a service package, thereby providing the packetized service package to the customer (or user).

Meanwhile, the service provider (20) may use a unicast or multicast method so as to provide services to the customer (40). The unicast method corresponds to a 1:1 transmission method transmitting data between one transmitter and one receiver (or recipient). For example, in case of the unicast method, when a receiver sends a request for data to the server, the server may transmit the corresponding data to the receiver in accordance with the request made by the receiver. The multicast method corresponds to a transmission method transmitting data to a specific group of multiple receivers (or recipients). For example, the server may simultaneously transmit data to multiple receivers that have been registered in advance. In order to perform such multicast registration, an IGMP (Internet Group Management Protocol) may be used.

The network provider (30) may provide a network for providing services to the customer (40). And, the customer (40) may build (or configure) a home network (*i.e*., a Home Network End User (HNED)) so as to be provided with diverse services.

Conditional Access or Content Protection may be used as a means for protecting the contents that being transmitted from the above-described image displaying system. Exemplary methods of such conditional access or content protection may include the usage of a CableCARD, a DCAS (Downloadable Conditional Access System), and so on.

Meanwhile, by using the network, the customer (40) may also be capable of providing contents. In this case, unlike as described above, the customer (40) may become the content provider, and the content provider (10) may receive contents from the customer (40). Accordingly, when configured to have the above-described structure, the system may be capable of providing a two-way (or bi-directional) content service or data service.

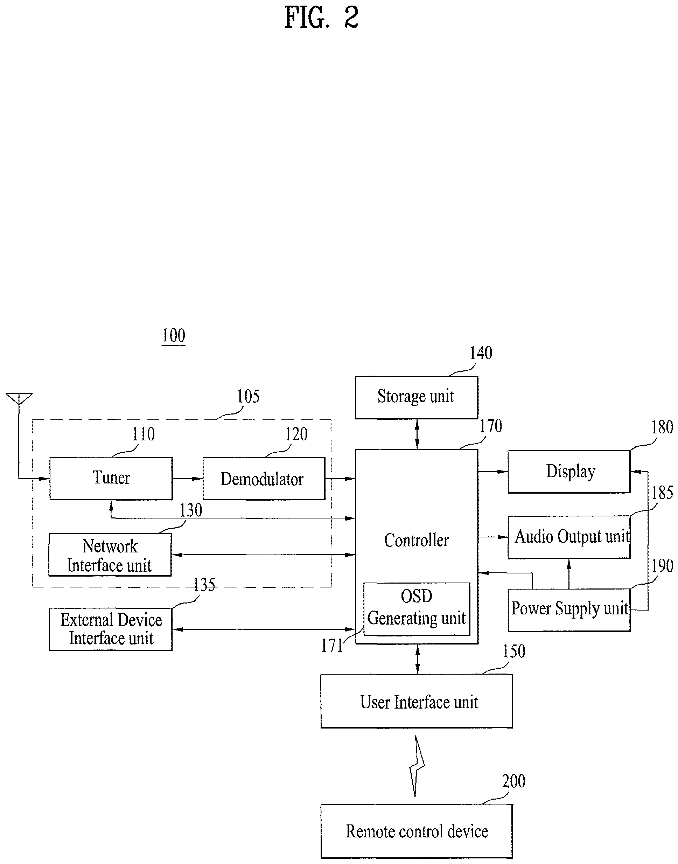

Fig. 2 illustrates a block view showing an internal structure of an image display device according to an exemplary embodiment of the present invention.

Referring to Fig. 2, the image display device (100) according to the exemplary embodiment of the present invention may include a broadcast receiving unit (105), an external device interface unit (135), a storage unit (140), a user input interface unit (150), a controller (170), a display unit (180), an audio output unit (185), and a power supply unit (190). Herein, the broadcast receiving unit (105) may include a tuner (110), a demodulator (120), and a network interface unit (130), and the controller (170) may include an OSD generating unit (171). Herein, the tuner (110) and the demodulator (120) and the network interface unit (130) may be optionally provided.

Herein, the image display device corresponds to a device that can display a predetermined image. And, the image display device may include a digital broadcast receiver, such as a digital television, that can receive and display digital broadcast signals or a digital broadcasting device, such as a Set-Top Box. If the image display device corresponds to a digital television, the image display device may internally include a display unit (204). Additionally, if the image display device corresponds to a set-top box, the display unit is not included in the image display device. Instead, the display unit may be connected to an external device performing the display functions (*e.g*., display panel, *etc*.).

Among a plurality of RF (Radio Frequency) broadcast signals being received through an antenna, the tuner (110) selects an RF broadcast signal respective to a channel selected by the user (or viewer) or selects an RF broadcast signal respective to all pre-stored channels. Then, the tuner (110) converts the selected RF broadcast signal to an intermediate frequency (IF) signal or a baseband video or audio signal.

The demodulator (120) may receive the converted digital IF signal (DIF) from the tuner (110) and may perform demodulating operations.

The stream signal outputted from the demodulator (120) may be inputted to the controller (170). The controller (170) performs demultiplexing and video/audio signal processing procedures on the inputted stream signal. Thereafter, the controller (170) outputs the image to the display unit (180) and outputs the sound to the audio output unit (185).

The external device interface unit (135) may connect the external device and the image display device (100). For this, the external device interface unit (135) may include an A/V input/output unit (not shown) or a radio communication unit (not shown).

The external device interface unit (135) may be connected to an external device, such as a DVD (Digital Versatile Disk), a Blu-ray, a gaming device, an image sensor, a camcorder, a computer (notebook), and so on, through a wired/wireless connection. The external device interface unit (135) delivers the image, sound, or data signal being inputted from an outside source through an external device connected to the external device interface unit (135) to the controller (170) of the image display device (100). Also, the image, sound, or data signal processed by the controller (170) may be outputted to the connected external device. In order to do so, the external device interface unit (135) may include an A/V input/output unit (not shown) or a radio communication unit (not shown).

The A/V input/output unit may include USB terminal, a CVBS (Composite Video Banking Sync) terminal, a component terminal, an S-video terminal (analog), a DVI (Digital Visual Interface) terminal, an HDMI (High Definition Multimedia Interface) terminal, an RGB terminal, a D-SUB terminal, and so on, so as to be able to input audio and video signals of the external device to the image display device (100).

The radio communication unit is capable of performing close range wireless (or radio) communication with other electronic devices. Based upon the telecommunication standards, such as, for example, Bluetooth, RFID (Radio Frequency Identification), IrDA (Infrared Data Association), UWB (Ultra Wideband), ZigBee, DLNA (Digital Living Network Alliance), and so on, the image display device (100) may be connected to other electronic devices via network.

Furthermore, the external device interface unit (135) may access diverse set-top boxes via at least one of the above-described terminals, thereby being capable of performing input/output operations with the respective set-top box.

Meanwhile, the external device interface unit (135) may receive an application or a list of applications existing within a neighboring external device and may deliver the received application or list of applications to the controller (170) or the storage unit (140).

The network interface unit (130) provides an interface for connecting the image display device (100) to a wired/wireless network including an internet network. In order to provide connection (or access) to a wired network, the network interface unit (130) may, for example, be provided with an Ethernet terminal. And, in order to provide connection (or access) to a wireless network, the network interface unit may be provided with diverse telecommunication standards, such as, for example, WLAN (Wireless LAN) (Wi-Fi), Wibro (Wireless broadband), Wimax (World Interoperability for Microwave Access), HSDPA (High Speed Downlink Packet Access), and so on.

The network interface unit (130) may access a predetermined web page through the network. More specifically, the network interface unit (130) may access a predetermined web page through the network, so as to transmit or receive data to or from a corresponding server. Additionally, the network interface unit (130) may also receive contents or data being provided by a content provider or a network operator. More specifically, the network interface unit (130) may receive contents, such as a movie, an advertisement, a game, a VOD, a broadcast signal, and so on, and also related information from a content provider or a network provider through the network. Moreover, the network interface unit (130) may also receive update information on firmware and update files that are provided from the network operator. The network interface unit (130) may also transmit data to the internet or content provider or network operator.

Additionally, among a plurality of applications open in the air through the network, the network interface unit (130) may select and receive a wanted application.

Furthermore, the network interface unit (130) may transmit a predetermined text or image data to a predetermined server through the network, so as to receive information related to the transmitted text or image data.

For example, the network interface unit (130) may transmit predetermined text information, so as to receive price information, sales information, user grading information of a product name included in the text information, and also to receive information, such as name, age, occupation, and so on, of a person included in the image data.

The storage unit (140) may store programs for processing and controlling each signal within the controller (170) and may also store signal-processed video, audio or data signals.

Additionally, the storage unit (140) may also perform the function of temporarily storing video, audio or data signals that are being inputted from the external device interface unit (135) or the network interface unit (130). Also, the storage unit (140) may store information associated to particular broadcast channels through a channel memory function.

Moreover, the storage unit (140) may store an application or a list of applications being inputted from the external interface unit (135) or network interface unit (130).

Also, the storage unit (140) may store information related to a predetermined broadcast channel through a channel memory function. Most particularly, when the storage unit (140) stores EPG information, which is included in a digital broadcast and then received, and when a call signal of the stored EPG information is delivered from the controller (170), stored EPG information may be transmitted to the control unit.

The storage unit (140) may include a storage medium of at least one of a flash memory type, a hard disk type, a multimedia card micro type, a card type memory (*e.g*., SD or XD memory, *etc*.), RAM, ROM (EEPROM, *etc*.) type. The image display device (100) may playback (or reproduce) contents files (moving picture files, still image files, music files, text files, application files, and so on) stored in the storage unit (140), so as to provide the corresponding contents files to the user.

Although Fig. 2 shows an example wherein the storage unit (140) is provided separately from the controller (170), the present invention will not be limited to the exemplary structure presented herein. The storage unit (140) may also be included in the controller (170).

The user input interface unit (150) either delivers (or sends) a signal inputted by the user to the controller (170) or delivers a signal outputted from the controller (170) to the user.

For example, in accordance with diverse telecommunication methods, such as RF (Radio Frequency) communication, Infrared (IR) communication, and so on, the user input interface unit (150) receives a user input signal or a control signal, such as power on/off, channel selection, screen settings, and so on, from a remote controlling device (200) in accordance with diverse communication methods, such as Bluetooth, RFID (Radio Frequency Identification), IrDA (infrared Data Association), UWB (Ultra Wideband), ZigBee, DLNA (Digital Living Network Alliance), and so on, and processes the received signal. Alternatively, the user input interface unit (150) may process a control signal received from the controller (170) so that the corresponding signal can be transmitted to the remote controlling device (200).

Additionally, for example, the user input interface unit (150) may deliver a user input signal or control signal, which is inputted through a local key (not shown), such as a power key, a channel key, a volume key, a hot key having a predetermined function designated thereto, and so on.

Also, for example, the user input interface unit (150) may deliver a control signal that is being inputted from a sensing unit (not shown), which senses a user's gesture, to the controller (170), or the user input interface unit (150) may transmit a signal outputted from the controller (170) to the sensing unit (not shown). Herein, the sensing unit (not shown) may include a touch sensor, a voice sensor, a position sensor, a motion sensor, and so on.

The controller (170) demultiplexes an inputted stream or processes demultiplexed signals, thereby generating and outputting signals for video or audio output, through the tuner (110) or the demodulator (120) or the external device interface unit (135).

A video signal that is image-processed (or video-processed) by the controller (170) is inputted to the display unit (180), so that the processed signal can be displayed as an image respective to the corresponding video signal. Also, the video signal that is image-processed (or video-processed) by the controller (170) may be inputted to an external output device through the external device interface unit (135).

The audio signal being processed by the controller (170) may be audio outputted to the audio output unit (185). Also, the audio signal being processed by the controller (170) may be inputted to an external output device through the external device interface unit (135).

The OSD generator (171) included inside the controller (170) generates an OSD signal in accordance with a user input or by itself. For example, based upon the user input signal or control signal, the OSD generator (171) may generate a signal for indicating diverse information on the display screen of the display unit (180) in the form of graphic or text. The generated OSD signal may include diverse data, such as a user interface screen of the image display device (100), diverse menu screens, widgets, icons, and so on.

For example, the OSD generator (171) may generate a signal for indicating subtitles of a broadcast image or EPG-based broadcast information.

In addition, the controller (170) may control the overall operations within the image display device (100). For example, the controller (170) may control the tuner (110), so that the image display device (100) can tune to (or select) an RF broadcast corresponding to a channel selected by the user or corresponding to a pre-stored channel.

Moreover, the controller (170) may control the image display device (100) by using a user command inputted through the user input interface unit (150) or by using an internal program.

For example, the controller (170) controls the tuner (110), so that a signal of a selected channel can be inputted in accordance with a predetermined channel select command received through the user input interface unit (150). Thereafter, the controller (170) processes the video, audio, or data signal of the selected channel. The controller (170) enables the information on the channel selected by the user to be outputted through the display unit (180) or the audio output unit (185) along with the processed video or audio signal.

Meanwhile, the controller (170) may control the display unit (180) so that an image can be displayed. For example, the controller (170) may control the display unit (180), so that a broadcast image being inputted through the tuner (110), an external input image being inputted through the external device interface unit (135), or an image being inputted through a network interface unit, or an image being stored in the storage unit (140) can be displayed on the display unit (180). At this point, the image being displayed on the display unit (180) may correspond to a still image or a moving picture image, and may correspond to a 2D image or a 3D image.

Meanwhile, when entering a See Application option, the controller (170) may perform control operations, so that an application or list of applications existing within the image display device (100) or being downloadable from an external network can be displayed.

The controller (170) may perform control operations enabling an application, which is downloaded from the external network, to be installed and operated along with other diverse user interfaces. Additionally, in accordance with the user's selection, control operations may be performed so that an image related to the executed application can be displayed on the display unit (180).

Meanwhile, when the controller (170) receives a data input request due to the execution of an application, or due to the input of a predetermined signal through the user input interface unit (150), while outputting a predetermined content through the display unit (180) of the image display device, the controller (170) may display a text input window for inputting data on the display unit (180), and then the controller (170) may set the image display device to a text input mode, so that a predetermined text corresponding to the signal, which is being inputted through the user input interface unit (150), can be inputted to the text input window.

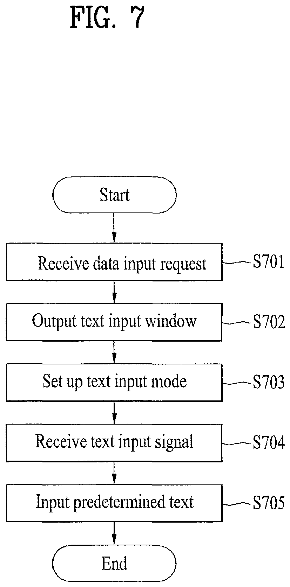

The above-described operation will be described in more detail later on with reference to Fig. 7.

Meanwhile, when the controller (170) receives a data input request due to the execution of an application, or due to the input of a predetermined signal through the user input interface unit (150), while outputting a predetermined content through the display unit (180) of the image display device, the controller (170) may display a message input window for inputting data on the display unit (180), and then the controller (170) may set the image display device to a message input mode, so that image data of a predetermined section, which is selected through the user input interface unit (150), can be inputted to the message input window.

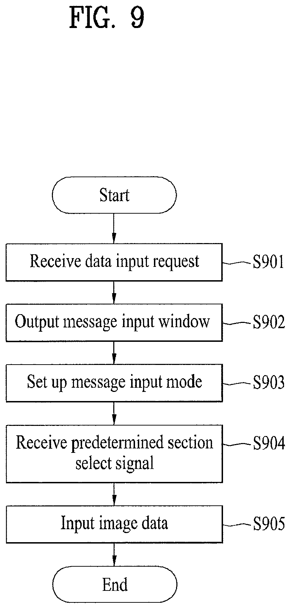

The above-described operation will be described in more detail later on with reference to Fig. 9.

Meanwhile, although it is not shown in the drawings, a channel browsing processing unit, which is configured to generate a thumbnail image corresponding to a channel signal or an external input signal, may be further equipped to the image display device. The channel browsing processing unit may receive a stream signal (TS) outputted from the demodulator (120) or a stream signal outputted from the external device interface unit (135) and may extract an image from the received stream signal, so as to generate a thumbnail image. The thumbnail image may be directly inputted to the controller (170) or may be inputted to the controller (170) after being encoded. Additionally, the generated thumbnail image may also be encoded in a stream format and then be inputted to the controller (170). The controller (170) may use the inputted thumbnail image, so as to display a thumbnail list including a plurality of thumbnail images on the display unit (180). Meanwhile, the thumbnail images included in such thumbnail list may be sequentially or simultaneously updated. Accordingly, the user may be capable of conveniently recognizing the contents of a plurality of broadcast channels.

The display unit (180) respectively converts the video (or image) signal, data signal, and OSD signal being processed by the controller (170), or the video (or image) signal, data signal, and so on being received by the external device interface unit (135) to R, G, and B signals, thereby generating a drive signal.

The display unit (180) may correspond to PDP, PCD, OLED, flexible display, 3-dimensional display (3D display), and so on.

Meanwhile, the display unit (180) may be configured of a touch screen, so as to be used as an input device in addition to an output device.

Additionally, the display unit (180) may display a predetermined text input window or a message input window due to an OSD signal, while outputting a predetermined content. In order to prevent the usage of the content, which is currently being outputted, from being interrupted, the text input window or the message input window may either be outputted in a semi-transparent color or may be outputted on a predetermined section of the display screen where the corresponding content is not being outputted.

The audio output unit (185) receives an audio-processed signal, *e.g*., a stereo signal, a 3.1 channel signal, or a 5.1 channel signal, from the controller (170), and outputs the received signal as sound. The audio output unit (185) may be realized in diverse forms of speakers.

Meanwhile, the image display device may further include a recording unit (not shown) recording (or filming) the user. Herein, the recording unit (not shown) may be configured of one(1) camera. However, the present invention will not be limited only to this example. And, therefore, the recording unit (not shown) may also be configured of a plurality of cameras. Image information being recorded (or filmed) by the recording unit (not shown) is inputted to the controller (170).

Meanwhile, in order to detect the gesture of the user, as described above, a sensing unit (not shown), which is equipped with at least one of a touch sensor, a sound sensor, a position sensor, and a motion sensor, may be further provided in the image display device (100). A signal detected by the sensing unit (not shown) may be delivered to the controller (170) through the user input interface unit (150).

The controller (170) may use each of the image recorded by the recording unit (not shown) or the signal detected from the sensing unit (not shown), individually or in combination, in order to detect (or sense) the position of the user and the gesture of the user.

The remote controlling device (200) transmits a user input to the user input interface unit (150). In order to do so, the remote controlling device (200) may use the Bluetooth, RF (Radio Frequency) communications, IR (Infrared) communications, UWB (Ultra Wideband), ZigBee methods.

Also, the remote controlling device (200) receives audio, video or data signals outputted from the user input interface unit (150), thereby being capable of displaying the received signals or outputting sound or oscillation (or vibration) from the remote controlling device (200).

The above-described image display device corresponds to an image display device that does not include the display unit (180) and the audio output unit (185) shown in Fig. 2. Herein, the above-described image display device may correspond to a wireless type image display device transmitting and receiving data to and from a display unit (180) and an audio output unit (185) via radio (or wireless) communication.

Meanwhile, the block view of the image display device (100) shown in Fig. 2 is merely a block view according to an exemplary embodiment of the present invention. Each element of the block view may be integrated, added, or omitted in accordance with the specification of the image display device (100) that is actually being realized. More specifically, whenever required, 2 or more elements may be combined as a single element, or one element may be segmented to 2 or more detailed elements. Additionally, the function performed by each block merely corresponds to an exemplary function presented to describe the embodiment of the present invention. And, therefore, a detailed operation of device will not limit the scope and spirit of the present invention.

Meanwhile, unlike as shown in Fig. 2, instead of being equipped with the tuner (110) and the demodulator (120), which are shown in Fig. 2, the image display device (100) may receive image contents through the network interface unit (130) or the external device interface unit (135) and may play the received image contents.

Additionally, the image display device according to the exemplary embodiment of the present invention shown in Fig. 2 has the same technical spirit and operation structure as the method for inputting a text or message according to an exemplary embodiment of the present invention, which will hereinafter be described in detail with reference to Fig. 7 to Fig. 14. Therefore, detailed operations of the image display device according to the exemplary embodiment of the present invention will be hereinafter described in detail with reference to the text inputting method of the image display device according to the exemplary embodiment of the present invention or with reference to the message inputted method of the image display device according to the exemplary embodiment of the present invention.

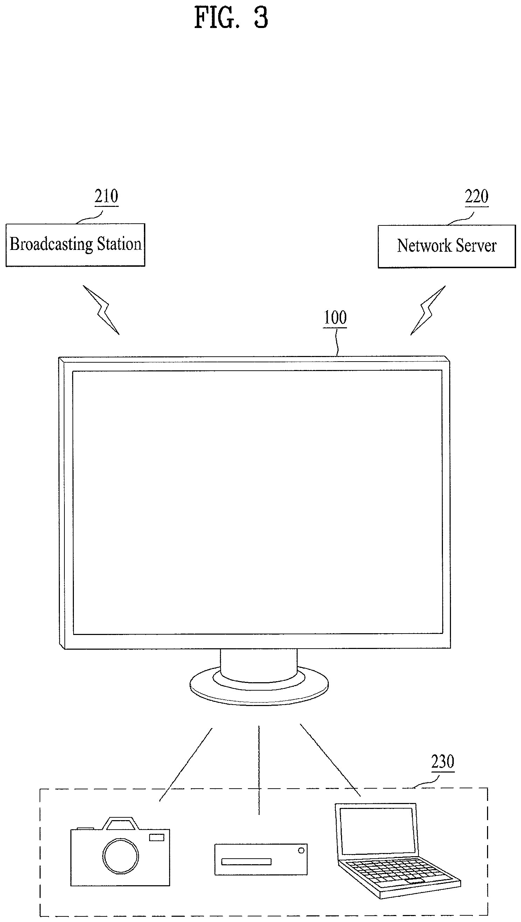

Fig. 3 illustrates a device that can perform data transmission and reception (or transception) to and from the image display device of Fig. 2.

Referring to the drawing, the image display device (100) according to the embodiment of the present invention may communicate with a broadcasting station (210), a network server (220) or an external device (230).

The image display device (100) may receive a broadcast signal including an image signal, which is transmitted from the broadcasting station (210). The image display device (100) may process the image signal and audio signal or data signal, which are included in the broadcast signal, so that the processed signals can be suitable for being outputted from the image display device (100). The image display device (100) may output an image or audio that is based upon the processed image signal.

Meanwhile, the image display device (100) may communicate with the network server (220). The network server (220) corresponds to a device that can transmit and receive signals to and from the image display device (100) through an arbitrary network. For example, the network server (220) may correspond to a mobile phone terminal, which can be connected to the image display device through a wired or wireless base station. Additionally, the network server (220) may correspond to a device that can provide contents to the image display device through an internet network. The contents provider may use the network server to provide contents to the image display device (100).

Meanwhile, the image display device (100) may communicate with an external device (230). The external device (230) corresponds to a device that can directly transmit and receive signals to and from the image display device (100) via wired or wireless communication. For example, the external device (230) may correspond to a media storage device or a playback device used by the user. More specifically, examples of the external device (230) may include cameras, DVD or Blu-ray players, personal computers, and so on.

The broadcasting station (210), the network server (220), or the external device (230) may transmit a signal including an image signal to the image display device (100). The image display device (100) may display an image based upon an image signal that is included in the inputted signal. Additionally, the image display device (100) may transmit a signal, which is transmitted from the broadcasting station (210) or the network server (220) to the image display device (100), to the external device (230). Moreover, a signal, which is transmitted from the external device (230) to the image display device (100) may also be transmitted to the broadcasting station (210) or the network server (220). More specifically, instead of directly playing back contents in the image display device (100), the image display device (100) may also deliver contents being included in the signal, which is transmitted from the broadcasting station (210), the network server (220), and the external device (230).

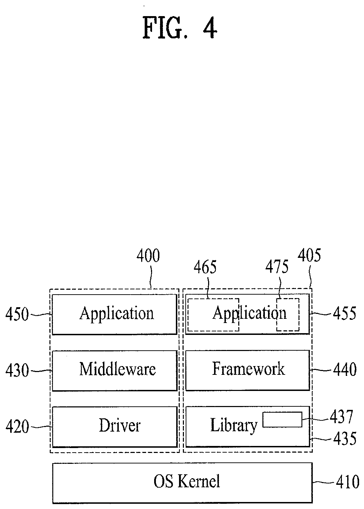

Fig. 4 to Fig. 5 respectively illustrate diverse exemplary structural views showing a platform of the image display device of Fig. 2.

A platform of the image display device (100) according to the embodiment of the present invention may be equipped with an OS-based software in order to perform the above-described diverse operation.

First of all, referring to Fig. 4, the platform of the image display device (100) according to another embodiment of the present invention corresponds to a separated type platform. Herein, the separated type platform may be designed to be separated to a Legacy System Platform (400) and a smart system platform (405). An OS Kernel (410) may be commonly in the both the legacy system platform (400) and the smart system platform (405).

The legacy system platform (400) may include a Driver (420), Middleware (430), an Application layer (450) over the OS Kernel (410).

Meanwhile, the smart system platform (405) may include a Library (435), a Framework (440), an Application layer (455) over the OS Kernel (410).

As an essential element of the operating system, when driving the image display device (100), the OS Kernel (410) may perform at least one of driving a hardware driver, maintaining hardware and processor security within the image display device (100), performing efficient management of system resources, managing memory, providing an interface respective to hardware due to an abstraction of the hardware, multiple processing, managing schedule respective to the multiple processing, and so on. Meanwhile, the OS Kernel (410) may further provide power management.

For example, the hardware driver within the OS Kernel (410) may include at least one of a display driver, a Wi-Fi driver, a Bluetooth driver, a USB driver, an audio driver, a power management (or power manager), a Binder driver, and a memory driver.

Additionally, the hardware driver within the OS Kernel (410) corresponds to a driver for the hardware device within the OS Kernel (410), wherein the driver includes a character device driver, a blocker device driver, and a network device driver. Since data are transmitted in specific block units, the block device driver may require a buffer, which can preserve a data size corresponding to the unit size. And, since data are transmitted in basic data units, *i.e*., character units, the character device driver may not require a buffer.

Such OS Kernel (410) may be realized as diverse operating system (OS) based kernels, such as a Unix-based (Linux) kernel, a Windows based kernel, and so on. Additionally, the OS Kernel (410) corresponds to an open OS kernel, which may correspond to a general purpose kernel that can be used in other electronic devices.

The driver (420) is positioned between the OS Kernel (410) and the Middleware (430). And, the driver (420) operates (or drives) a device for the operations of the application layer (450) along with the middleware (430). For example, the driver (420) may include drivers, such as a micom within the image display device (100), a display module, a graphic processing unit (GPU), a frame rate converter (FRC), a GPIO (General Purpose Input/Output Pin), HDMI, SDEC (System Decoder or Demultiplexer), VDEC (Video Decoder), ADEC (Audio Decoder), PVR (Personal Video Recorder), or an I2C (Inter-Integrated Circuit). Such drivers may operate in correlation with the hardware driver within the OS kernel (420).

Additionally, the driver (420) may be further equipped with a remote controlling device (200) and, most particularly, a driver of a spatial remote controller, which will be described in detail later on. Meanwhile, in addition to the driver (420), the driver of the spatial remote controller may be diversely provided within the OS kernel (410) or the middleware (430).

The middleware (430) is positioned between the OS Kernel (410) and the application layer (450). Herein, the middleware (430) may perform the function of a medium enabling data to be transmitted and received between different types of hardware or software. Thus, a standardized interface may be provided and, therefore, diverse environments may be supported, and interoperability with processes of another system may be realized.

Examples of the middleware (430) within the legacy system platform (400) may include MHEG (Multimedia and Hypermedia information coding Experts Group) and ACAP (Advanced Common Application Platform), which correspond to middleware associated with data broadcasting, PSIP or SI middleware, which correspond to middleware associated with broadcast information, and DLNA middle ware, which corresponds to middleware associated with peripheral device communication.

The application layer (450) provided over the middleware (430), *i.e*., the application layer (450) within the legacy system platform (400) may, for example, include a User Interface Application related to diverse menus within the image display device (100). The application layer (450) provided over such middleware (430) may be edited by the user's selection and may be updated through the network. By using such application layer (450), among diverse user interfaces, the user may access a wanted menu in accordance with an input of the remote controller device (200), while the user is viewing the broadcast image.

Additionally, the application layer (450) of the legacy system platform (400) may further include at least one of a TV Guide application, a Bluetooth application, a reservation application, a Digital Video Recoder (DVR) application, and a Hot Key application.

Meanwhile, the library (435) within the smart system platform (405) is positioned between the OS kernel (410) and the framework (440) and may configure the basis of the framework (440). For example, the library (435) may include an SSL (Secure Socket Layer), which corresponds to a security associated library, a WebKit and a libc (c library), which correspond to web engine associated libraries, and a Media Framework, which corresponds to a media associated library, such as video format media, audio format media, and so on. Such library (435) may be written (or configured) based upon a C or C++ language. Furthermore, the library (435) may be exposed to developers through the framework (440).

The library (435) may include a runtime (437) being provided with a core java library and a Virtual Machine (VM). Such runtime (437) configures the basis of the framework (440) along with the library (430).

The virtual machine (VM) may correspond to a virtual machine that can perform multiple instances, *i.e*., that can perform multi-tasking. Meanwhile, each virtual machine (VM) may be allocated and executed in accordance with each application within the application layer (455). At this point, in order to perform schedule adjustment between the multiple instances, in order to interconnect the multiple instances, a Binder driver (not shown) within the OS kernel (410) may be operated.

Meanwhile, the binder driver and the runtime (437) may connect the java-based application and the C-based library.

Meanwhile, the library (435) and the runtime (437) may correspond to the middleware of the legacy system.

Meanwhile, the framework (440) within the smart system platform (405) includes a program, which acts as the basis of an application within the application layer (455). The framework (440) may be backward compatible with any other application, and the framework (440) may reuse, relocate (or reposition), or exchange components. The framework (440) may include a supporting program, a program interconnecting other software elements, and so on. For example, the framework (440) may include a resource manager, an activity manager associated with application activities, a notification manager, a content provider recapitulating share information (or information shared) between the applications, and so on. Such framework (440) may be configured based upon a JAVA language.

The application layer (455) provided over the framework (440) includes diverse programs that can be driven (or operated) within the image display device (100) and displayed. For example, the application layer (455) may include a Core Application being equipped with at least one of email, short message service (SMS), calendar, map, browser, and so on. Such application layer (450) may be configured based upon a JAVA language.

Additionally, the application layer (455) may be divided into an application (465) that is stored in the image display device (100) and that cannot be deleted by the user, and an application (475) that is downloaded through an external device or network and stored in the image display device (100) and that can be easily installed and deleted by the user.

By using such application provided in the application layer (455), diverse services, such as internet telephone services, video on demand (VOD) services, web album services, social networking services (SNS), location based services (LBS), map services, web search services, application search services, and so on, may be performed via network connection. Additionally, other diverse functions, such as games, schedule management, and so on, may also be performed.

Subsequently, referring to Fig. 5, the platform of the image display device (100) according to the exemplary embodiment of the present invention corresponds to an integrated type platform. Herein, the platform of Fig. 5 may include an OS Kernel (510), a driver (520), a Middleware (530), a Framework (540), and an Application layer (550).

As compared to the platform shown in Fig. 4, the platform shown in Fig. 5 is different from the platform shown in Fig. 4 in that the library (435) shown in Fig. 4 is omitted, and that the application layer (550) is provided as an integrated layer. Additionally, the driver (520) and the framework (540) respectively correspond to those of Fig. 4.

Meanwhile, it may be considered that the library (435) of Fig. 4 integrated with the middleware (530). More specifically, the middleware (530) may correspond to a middleware within the legacy system, wherein the middleware may include MHEG and ACAP middleware, which correspond to middleware associated with data broadcasting, PSIP or SI middleware, which correspond to middleware associated with broadcast information, and DLNA middleware, which corresponds to middleware associated with peripheral device communication, as well as SSL (Secure Socket Layer), which corresponds to a security associated library, a WebKit and a libc, which correspond to web engine associated libraries, and a Media Framework, which corresponds to a media associated library, such as video format media, audio format media, and so on. Meanwhile, the middleware (530) may further include the above-described runtime.

The application layer (550) may correspond to an application within the legacy system, wherein the application may include a menu related application, TV guide application, reservation application, and so on, and the application layer (550) may also correspond to an application within the image display device system, wherein the application may include email, SMS, calendar, map, and browser functions.

Additionally, the application layer (550) may be divided into an application (565) that is stored in the image display device (100) and that cannot be deleted by the user, and an application (575) that is downloaded through an external device or network and stored in the image display device (100) and that can be easily installed and deleted by the user.

The above-described platform shown in Fig. 4 and Fig. 5 may be used for multiple purposes in the image display device as well as other diverse electronic devices. Meanwhile, the platform shown in Fig. 4 and Fig. 5 may be loaded on the storage unit (140) or the controller (170) or another separate processor (not shown).

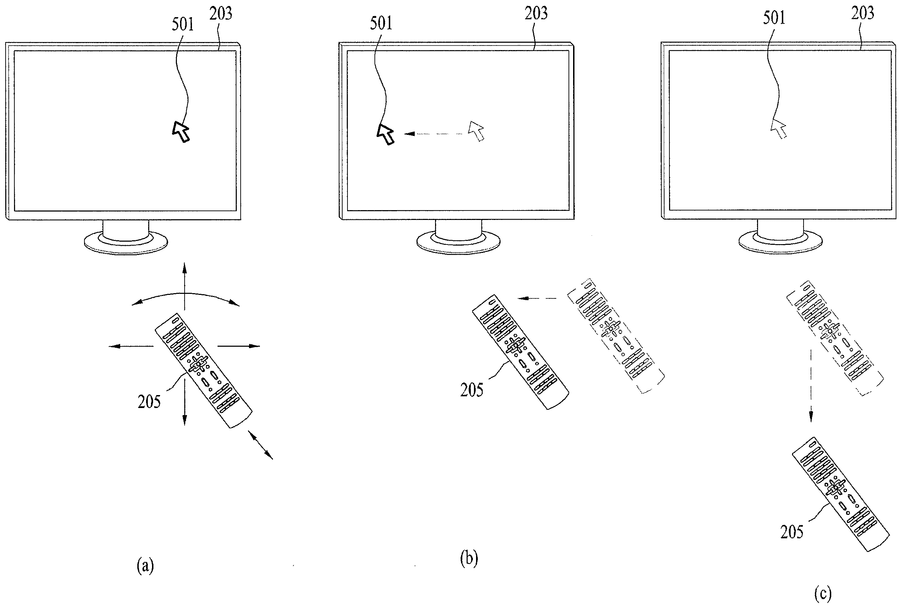

Fig. 6 illustrates an image showing operations of a remote control device of Fig. 2.

Referring to the drawing, the remote controller device (200) may transmit and receive signals to and from the image display device (100) in accordance with an RF communication standard or an IR communication standard.

Fig. 6(a) shows an example of a pointer (205) corresponding to the remote controller device (200) being displayed on the display unit (180).

The user may move or rotate the remote controller device (200) along vertical (up and down) and horizontal (left and right) directions (Fig. 6(b)) and back and forth directions (Fig. 6(c)). The pointer (205) displayed on the image display device (100) corresponds to the movement of the remote controller device (200). As shown in the drawing, since the corresponding pointer (205) is moved in accordance with the movement within a 3D space, such remote controller device (200) may also be referred to as a spatial remote controller.

Fig. 6(b) shows an example of the pointer (205) being displayed on the image display device moving leftwards within respect to the remote controller device (200), when the user moves the remote controller device (200) to the left (or leftwards). Herein, information on the movement of the remote controller device (200), which is detected by a sensor of the remote controller device (200), is transmitted to the image display device (100). The image display device (100) may calculate coordinates of the pointer (205) from the information on the movement of the remote controller device (200). The image display device (100) may display the pointer (205) with respect to the calculated coordinates.

Fig. 6(c) shows an example of the user moving the remote controller device (200) further away from the display unit (180), while pressing on a specific button within the remote controller device (200). Accordingly, the selected section of the display unit (180), which corresponds to the pointer (205), may be zoomed-in, so as to be enlarged and displayed. Conversely, when the user moves the remote controller device (200) closer towards the display unit (180), the selected section of the display unit (180), which corresponds to the pointer (205), may be zoomed-out, so as to be reduced and displayed. Meanwhile, when the remote controller device (200) moves further away from the display unit (180), the selected section may be zoomed out, and when the remote controller device (200) moves closer towards the display unit (180), the selected section may be zoomed in.

Meanwhile, when a specific button within the remote controller device (200) is in a pressed state, the vertical and/or horizontal movement of the remote controller device (200) may not be recognized. More specifically, when the remote controller device (200) is moved closer towards or further away from the display unit (180), the up, down, left, and right movements of the remote controller device (200) may not be recognized and only the forward and backward movements may be recognized. In a state when the specific button within the remote controller device (200) is not pressed, only the pointer (205) may be moved in accordance with the up, down, left, and right movements of the remote controller device (200).

Additionally, when a specific button within the remote controller device (200) is in a pressed state, the image display device may be set up in the text input mode. More specifically, when the specific button within the remote controller device (200) is pressed, a predetermined number may be tagged to a predetermined section of the EPG information, which is being outputted to the display unit (180) of the image display device (200), and then the tagged number may be displayed. Additionally, when the specific button is in a pressed state, the screen that is currently being displayed on the display unit (180) of the image display device (200) may be divided into a plurality of selectable sections so as to be displayed. Then, settings may be made so that the divided sections can be selected by Drag & Drop operations.

Meanwhile, the movement speed or movement direction of the pointer (205) may correspond to the movement speed or movement direction of the remote controller device (200).

Meanwhile, in the description of the present invention, the pointer signifies an object being displayed on the display unit (180) with respect to the operation of the remote controller device (200). Therefore, in addition to the arrow shape displayed in the drawing, objects having other diverse shapes may be displayed as the pointer (205). For example, the pointer (205) may correspond to a concept of a point, a cursor, a prompt, a thick outline, and so on. And, the pointer (205) may also be displayed with respect to any one point along the horizontal axis and the vertical axis within the display unit (180) as well as multiple points, such as a line or a surface.

Fig. 7 illustrates a flow chart showing the process steps for inputting a predetermined text according to the exemplary embodiment of the present invention.

Referring to Fig. 7, the image display device according to the embodiment of the present invention receives a data input request during the output of a predetermined set of contents (S701).

According to the embodiment of the present invention, the image display device may receive a request to input data in accordance with the execution of a predetermined application. For example, when the user executes an internet search application in the image display device, or when the user executes a message transmission application in the image display device, the data input request may be received by the corresponding application is executed.

Additionally, the data input request may be received regardless of the continued operations of the image display device. For example, even when the user received a predetermined digital broadcast through the image display device, or when the user is using the internet through the image display device, or when the user is executing an application for a video phone call, the data input request may be received in accordance with the execution of a separate application.

Subsequently, as the image display device receives the data input request, the image display device displays a text input window to the display unit (S702).

For example,, the text input window for inputting a predetermined text in accordance with the data input request may be displayed in a pre-designated section of the display unit.

At this point, according to the embodiment of the present invention, the text input window may either be outputted in a semi-transparent color or may be outputted on a predetermined section of the display screen where the corresponding content is not being outputted.

For example, when the data input request corresponds to a data input request respective to the execution of an application for using SNS (Social Network Service), the image display device may display a text input window for inputting a message, which is to be uploaded to an SNS homepage of the user, on the display unit.

Therefore, the text input mode may be set in the image display device (S703).

According to the embodiment of the present invention, by outputting the text input window of step (S702), the image display device may set up the image display device to the text input mode, or the image display device may receive a separate signal for setting up the image display device to the text input mode.

For example, when the user receives an input signal through the user input interface unit by inputting a Hot Key of the image display device or remote controller, the image display device may be set up to the text input mode.

Additionally, according to the embodiment of the present invention, the image display device determines whether or not the pressed state of the Hot Key included in the image display device or remote controller is maintained through the user input interface unit. And, while the pressed state is maintained, the image display device may be set up to the text input mode.

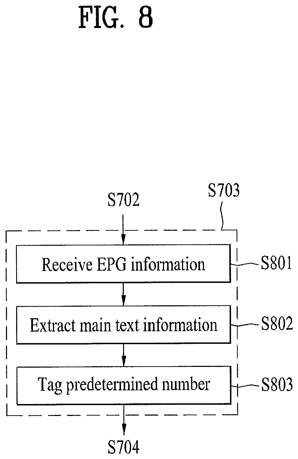

According to the embodiment of the present invention, a predetermined section of the text information included in the EPG is marked as a block, so that the user can conveniently input a predetermined text. Then, a predetermined number is tagged to each block. This process will be described in detail with reference to Fig. 8.

Subsequently, the image display device receives a predetermined text input signal through the user input interface unit (S704). According to the embodiment of the present invention, the user may input a signal for inputting a predetermined text through an input means, *i.e*., key button, keypad, touch pad, touch screen, and so on, which is equipped in the remote controller or touch screen.

Additionally, according to the embodiment of the present invention, when a predetermined text is tagged to a specific number, the user may input a signal for inputting a predetermined text by simply inputting a key button or key pad of the remote controller.

Thereafter, the image display device inputs a predetermined text corresponding to the text input signal to the text input window (S705).

According to the embodiment of the present invention, the predetermined text may either be inputted to the text input window in the form of simple text information, or may be inputted to the text input window in the form of a Hash tag.

A hash tag refers to a tag format that is used in Twitter, which is an SNS. Herein, the hash tag corresponds to a search function that shows a list of written materials (or texts) having the same subject in one screen. More specifically, when '#subject word' is inputted in the search window, all written materials related to the inputted subject word are searched. Accordingly, when the related information is inputted in the hash tag format as the twitter message input, the user may easily share a message related to the same subject work with other Twitter users.

According to the above-described text inputting method, when the user wishes to transmit a message to other users with respect to a content that is being outputted through the image display device, or when the user wishes to upload a post targeting a plurality of non-specific users, the user may easily input a predetermined text related to the contents by simply performing key input without having to input predetermined information through the text key.

Fig. 8 illustrates a flow chart showing detailed process step (S703) for setting up the text input mode of Fig. 7 according to the exemplary embodiment of the present invention.

The process step for setting up the text input mode (S703) may include a step of receiving EPG information (S801), a step of extracting main text information (S802), and a step of tagging a predetermined number to the main text information (S803).

When the text input window is outputted (S702), the image display device loads the EPG information, which is stored in the storage unit within the image display device. (S801).

The EPG (Electronic Program Guide) corresponds to a broadcast contents guide service that transmits information on the broadcasting time, contents (or synopsis), the starring actors of the corresponding contents by suing an empty frequency band or additional channel of a digital broadcast. As an electronic program content guide that is identical to a printed broadcast contents guide, the received EPG information is stored in the storage unit within the image display device. The user operates the EPG through the user input interface unit, so as to select and reserve contents. And, then, the user may perform operations, such as pay per view contents order, contents search by subject or genre, download, and so on.

Subsequently, main text information is extracted from the EPG information (S802).

According to the embodiment of the present invention, the main text information corresponds to information being extracted from the EPG in order to be inputted to the text input window. Herein, the main text information may include at least one of a contents name for each program included in the EPG, name of the main characters, name of the actors, name of the content provider, and name of the producer.

Thereafter, a predetermined number is tagged to the extracted main text information (S803).

By tagging a predetermined number to the extracted main text information, the user may include a wanted text by performing a keypad input on the remote controller.

According to the embodiment of the present invention, by using importance level determination data or usage frequency data of the text information stored in the image display device, the importance level or usage frequency of the extracted main text information is determined, so that numbers can be sequentially tagged to the extracted text information in accordance with the order of the importance level and the order of the usage frequency.

For example, in accordance with the user's text information usage frequency data, which are stored in the storage unit of the image display device, when the name of the actors corresponds to the text information most frequently used by the user, and when the name of the contents corresponds to the next most frequently used text information, among the information included in the EPG, number '1' is tagged to the text corresponding to the actor name, and number '2' is tagged to the text corresponding to the content name.

Fig. 9 illustrates a flow chart showing the process steps for inputting a message according to an exemplary embodiment of the present invention.

Among the predetermined content output of Fig. 9, a step receiving a data input request (S901) and a step of outputting a message input window to the display unit (S902) respectively correspond to the step of receiving a data input request (S701) and the step of outputting a message input window (S702) of Fig. 7, except for the difference between Fig. 9 and Fig. 7 in that the input subject of Fig. 9 corresponds to a message including text and image data. And, therefore, the detailed description of the flow chart shown in Fig. 9 will be given with reference to step S903.

When the message input window in displayed on the display unit of the image display device in step (S902), the image display device is set up in the message input mode (S903).

According to the embodiment of the present invention, the message input mode may be set up to divide a display screen of the image display device in multiple selectable sections and to display the divided sections.

For example, when the message input mode is set up, the image display device analyzes a screen, which is currently being displayed through the display unit, so that the screen that is currently being displayed can be divided in accordance with a predetermined surface area, or so that a section having predetermined information tagged thereto can be separated from another section and be displayed accordingly. More specifically, when information on a male character being shown on a screen that is currently being displayed exists in the EPG information, the section including the section where the corresponding male character is being displayed may be separated from another predetermined section and may then be displayed accordingly.

Additionally, according to another embodiment of the present invention, the message input mode is set up so that a predetermined section can be selected by performing a Drag & Drop operation (or motion) on the display screen of the image display device.

For example, when the message input mode is set up in the image display device, the user may move the pointer through the remote controller device of the image display device, so as to be capable of selecting a predetermined section of the display unit by performing a Drag & Drop motion.

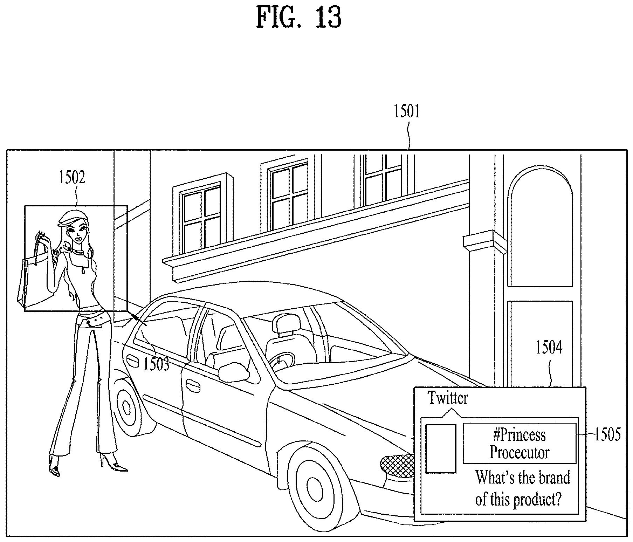

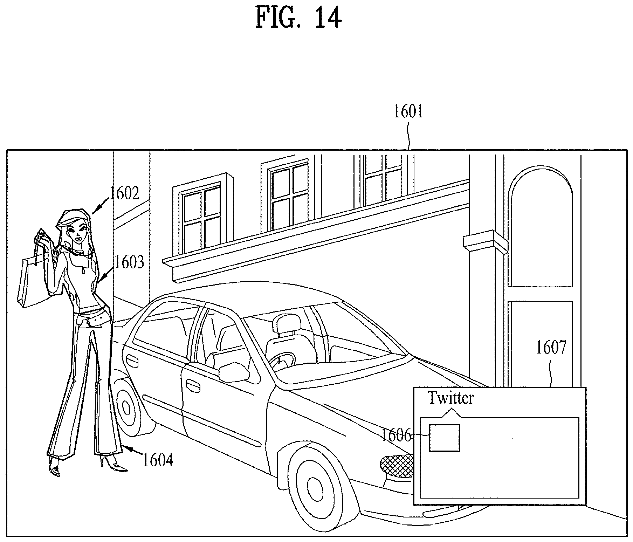

The above-described embodiment of the present invention will be described in more detail later on with reference to Fig. 13 and Fig. 14.

Subsequently, the image display device receives a Select signal of a predetermined section (S904).

The image display device receives a select signal of a section that is to be used by the user among a predetermined section, which is set up by the message input mode, through the user input interface unit (150).

Thereafter, the image display device inputs image data of the selected section in the message input window (S905).

According to the embodiment of the present invention, the image data may have its size automatically adjusted to fir the size of the message input window.

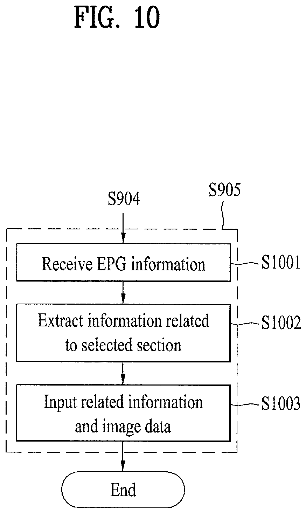

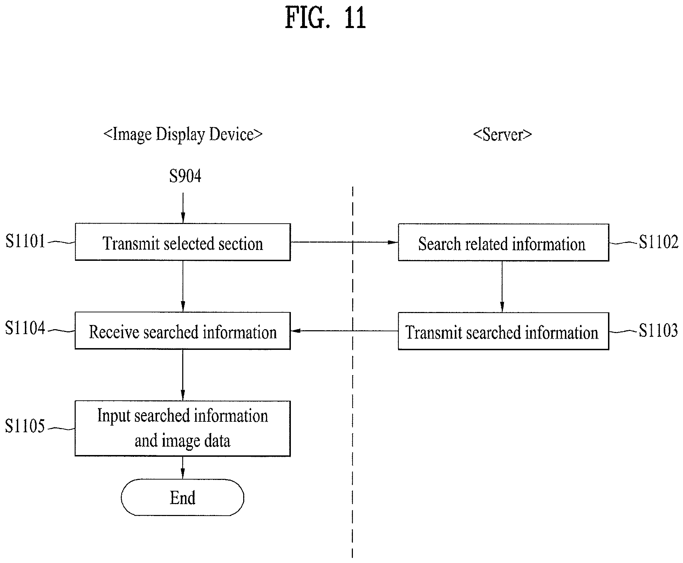

Additionally, according to another embodiment of the present invention, predetermined information related to the image data may be inputted along with the corresponding image data. This will be described in more detail later on with reference to Fig. 10 and Fig. 11.

Moreover, according to the embodiment of the present invention, the predetermined information may be inputted in a simple text information format, or may be inputted in a hash tag format. This is identical to the example described in Fig. 7.

By using the above-described message inputting method, the user may be capable of accurately inputting image data corresponding to a portion (or section) of the content that is difficult to be accurately described by using only text. Thus, information may be delivered more quickly and more conveniently.

Furthermore, by inputting predetermined information related to the image data along with the image data of the selected section, a screen of the content that is currently being outputted by the image display device may be diversely used.

Fig. 10 illustrates a flow chart showing detailed process steps for inputting image data of Fig. 9 according to the exemplary embodiment of the present invention.

According to the embodiment of the present invention, the step of inputting image data (S905) of Fig. 9 may receive EPG information and may extract information related to the selected section from the information included in the EPG information, thereby inputting the extracted information to the message input window along with the image data.

The image display device receives EPG information of content that is currently being displayed (S1001). According to the embodiment of the present invention, the EPG information may be received along with the reception of the contents, so as to be stored in the storage unit of the image display device.

Subsequently, among the diverse information on the contents included in the EPG information, information related to the selected section is extracted.

According to the embodiment of the present invention, diverse image analysis algorithms for extracting the related information may be used herein.

Thereafter, the extracted related information and the image data of the selected section are inputted to the message input window (S1003).

According to the embodiment of the present invention, the extracted related information may be inputted as text information for describing the image data of the selected section.

For example, a message may be composed (or written) to include the name of the producer of the corresponding content, for the purpose of displaying the source of the image data of the selected section.

Moreover, according to another embodiment of the present invention, information on an address for transmitting the message may be determined (or recognized) by using the extracted information.

For example, when a predetermined product image is included in the image data of the selected section, by using the information on the producer of the content, which is included in the extracted information, the user may transmit a message including the image data and questions on the corresponding product to the producer of the content.

Fig. 11 illustrates a flow chart showing detailed process steps for inputting image data of Fig. 9 according to another exemplary embodiment of the present invention.

The image display device may transmit image data of a selected section to a server, which is connected to the network for inputting a message, and may receive searched information related to the image data of the selected section and may input the received information to the message input window along with the image data.

When a select signal of a predetermined section is received in step (S904), the image data of the selected section is transmitted to a predetermined server, which is connected through the network (S1101).

Herein, diverse telecommunication standards, such as Bluetooth, RFID (Radio Frequency Identification), IrDA (Infrared Data Association), UWB (Ultra Wideband), ZigBee, DLNA (Digital Living Network Alliance), may be used as the transmission method.

The server corresponds to a server being connected to the image display device and the content provider through the network. Herein, the server includes a database having content data, content related information, image analysis information, and so on stored therein.

When image data of the selected section are transmitted to a predetermined server, the server searches the database so as to find information related to the image data (S1102).

According to the embodiment of the present invention, diverse image analysis algorithms, such as image enhancement, image restoration, image segmentation, and so on, may be used for the information search.

For example, the related information may include a product name of a product included in the selected image data, product price information, and manufacturer information, or may include name, age, occupation, and so on, of a character included in the selected image data.

Subsequently, the server transmits the searched information to the image display device through the network (S1103).

According to the embodiment of the present invention, among the searched information, only the main information may be extracted and transmitted to the image display device.

Thereafter, the image display device receives the searched information (S1104). According to the embodiment of the present invention, the received search information may be outputted to a predetermined section of the display unit of the image display device. Additionally, among the received search information, the search information that is to be used by the user may be selected by the user.

Afterwards, the image display device may input the search information and the image data of the selected section to the message input unit (S1105).

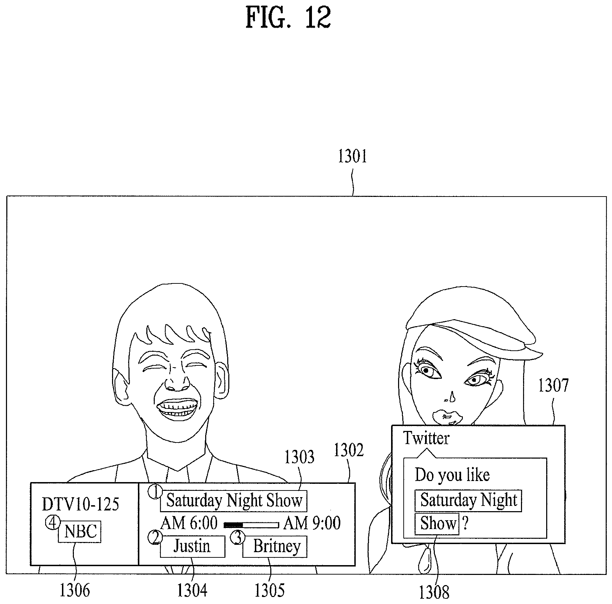

Hereinafter, Fig. 12 to Fig. 14 illustrate drawings for describing the user interface according to an embodiment of the present invention. Herein, the text input window and the message input window include applications that can be used by performing diverse data input, such as an application for performing an internet search, an application for transmitting a message to a mobile communication terminal, and so on. However, the drawings mentioned above illustrate an user interface according to the embodiment of the present invention executing an application for using a Twitter service, which corresponds to an SNS (Social Network Service).

Fig. 12 illustrates a user interface inputting a predetermined text by using an EPG according to an exemplary embodiment of the present invention.

As shown in Fig. 12, content and EPG (1302) that are currently being outputted from the image display device and the text input window (1307) may be displayed on one display screen (1301).

According to the embodiment of the present invention, the EPG information (1302) and the text input window (1307) may be displayed in a semi-transparent color in order to minimize any inconvenience in viewing the content that is currently being outputted, or the EPG information (1302) and the text input window (1307) may be displayed on a section where the current content is not being outputted.

According to the embodiment of the present invention, the EPG information (1302) may include content name (1303), actor name (1304), content provider (1306), and character name (1305), content play time (or running time), channel name, synopsis information, and so on.

Additionally, when the image display device is set to the text input mode, among the EPG information, only the main information that can be used by the user as text information may be extracted through the main information data, which are stored in the image display device. And, then, a predetermined number may be tagged to the extracted information. For example, by using importance level determination data or usage frequency data of the text information stored in the image display device, when only the content name (1303), the actor name (1304), the character name (1305), and the content provider (1306) are determined as the main information, by determining the importance level of the information included in the EPG information, or by determining the usage frequency of the user extracted main text information, predetermined numbers may be tagged to the main information.

For example, number '1' may be tagged to the contents name (1303), and number '2' may be tagged to the actor name. And, by setting up the text input mode, as described above, the user may easily input a wanted text by simply inputting the corresponding number.

Additionally, when a predetermined number is tagged in accordance with the level of importance or usage frequency, as described above, the user may be capable of intuitively determining within number is tagged to which text.

Fig. 12 shows an example of tagging numbers ranging from 1 to 4 to the main information. The number of tagged main information sets may be changed in accordance with the user settings.

According to the embodiment of the present invention, the user may input a predetermined wanted text in the text input window (1307) by simply inputting the corresponding information on the keypad through the remote controller or image display device.

For example, when the user seeks to input the content name (1303) 'Saturday Night Show' as the text, by inputting the number key '1' in the keypad, the user may be capable of inputting the text (1308) 'Saturday Night Show' in the text input window (1307).

Fig. 13 illustrates a user interface inputting a predetermined section of image data according to an exemplary embodiment of the present invention.

Unlike Fig. 12, Fig. 13 shows an example when the data that the user wishes to input correspond to image data according to the embodiment of the present invention.

A user interface screen (1501) that is currently outputting a predetermined content may be outputted while including the message input window (1504).

According to the embodiment of the present invention, when the message input mode is set up while the corresponding content is being outputted, a predetermined section (1502) of the display screen may be selected by performing a Drag & Drop operation on the pointer (1503).

According to the embodiment of the present invention, when the predetermined section is selected, information related to the selected section may be extracted through the EPG information of the content, which is currently being outputted. Additionally, according to another embodiment of the present invention, image data of the selected section may be transmitted to a predetermined server through the network, thereby enabling the related information to be received.

Moreover, the related information may be inputted to the message input window (1504) along with the image data of the selected section.

According to the embodiment of the present invention, the related information may be inputted to the message input window in a text format. And, according to another embodiment of the present invention, the related information may be inputted to the message input window in a hash tag format (1505). More specifically, as the predetermined information of the content, which is currently being outputted, is inputted to the message input window in the hash tag format, the user may be capable of more conveniently sharing the related information with non-specific multiple Twitter users.

Furthermore, by directly (or personally) inputting the image data of the selected section, the user may be capable of transmitting a more accurate message, as compared to when transmitted a message by using only the text format.

Fig. 14 illustrates a user interface inputting a predetermined section of image data according to another exemplary embodiment of the present invention.

According to embodiment of the present invention, when the message input mode is set up using the output of a predetermined content, the display screen that is currently being outputted is divided into a plurality of selectable sections. The image display device analyzes the image data of the display screen, which is currently being outputted, searches for a section having the predetermined information tagged thereto, and may divide the searched section to a plurality of sections in accordance with the searched information.

For example, based upon the result of analyzing the image data of the display screen, which is currently being outputted, when predetermined information is tagged to a specific character (1602) being displayed on the display screen, and when predetermined information is respectively tagged to clothing (1603, 1604) worn by the character, each of the corresponding sections (1602, 1603, 1064) may be divided into a plurality of selectable sections and displayed accordingly.

When a select signal of a predetermined section is received through the user input interface unit (150), image data (1606) of the selected section are inputted to the message input window (1607). More specifically, when the user selects a section (1603) including a top clothing worn by a character displayed on the screen, image data (1606) of the corresponding top clothing is inserted in the message input window (1607).

According to the embodiment of the present invention, just as described in Fig. 13, EPG information of information related to the image data of the selected section may be searched, or the related information may be received through a predetermined server, so that the received information can be inputted to the message input window (1607) along with the image data of the selected section.

Additionally, it has already been described above with reference to Fig. 13 that the related information can be inserted in a text format or in a hash tag format.

According to the embodiment of Fig. 14, the user may conveniently select a wanted predetermined section. And, by directly inputting the selected section in the message input window, the user may accurately deliver the message he (or she) wishes to transmit.

Meanwhile, the terminology used in the description of the present invention corresponds to terms that are defined while considering the functions of the present invention. Since the terms may vary in accordance with the intentions or practice of anyone skilled in the art, the definition of the terms used herein shall be given based upon the overall content of the description of the present invention.

It will be apparent that the present invention will not be limited only to the exemplary embodiments described herein. And, therefore, anyone skilled in the art may perform diverse modification and change on the embodiments of the present invention as defined in the claims. And, such modification and change shall be included in the of the present invention, which are defined in the appended claims.

### Mode for Carrying Out the Present Invention

As described above, the related details have been described in "the best mode for carrying out the present invention".

### Industrial Applicability

As described above, since the embodiments of the present invention can be applied to image display devices, such as, for example, TVs, smart phones, PCs, and so on, the present invention has industrial applicability.

## Claims

1. A text inputting method in an image display device (100), comprising:
receiving a content including Electronic Program Guide, EPG, information;
receiving a data input request during an output of the received content;
displaying a text input window (1307) for inputting data and setting up a text input mode, the setting up the text input mode includes extracting text information from the received EPG information, tagging predetermined numbers to the extracted text information and displaying the EPG information including a plurality of blocks corresponding to the extracted text information with the tagged predetermined numbers;
receiving a number key input signal for selecting one of the tagged predetermined numbers; and
displaying text information corresponding to the received number key input signal in the text input window (1307),
wherein the tagging of predetermined numbers comprises:
determining an importance level of each of the extracted text information based on user's text information usage frequency data stored in a storage unit (140) of the image display device (100); and
tagging a number in accordance with an order of the importance level,
wherein the extracted text information includes at least one of a content name, a character name, an actor name, a content provider name, and a producer name.

2. The method of claim 1, wherein the receiving the number key input signal comprises:
receiving the number key input signal of the image display device (100) or a remote controller (200).

3. The method of claim 1, wherein the receiving the data input request comprises:
triggering the data input request by executing a predetermined application.

4. The method of claim 1, wherein the setting up the text input mode comprises:
receiving a Hot Key input signal of the image display device (100) or a remote controller (200); and
setting up the text input mode according to the received Hot Key input signal.

5. The method of claim 4, wherein the step of setting up the text input mode comprises:
determining whether or not a pressed state of the Hot Key of the image display device (100) or the remote controller (200) is being maintained; and
setting up the text input mode while the pressed state is being maintained.

6. The method of claim 1, wherein the text includes a message.

7. In an image display device (100) having a text input function, the image display device (100), comprising:
a receiving unit (110) configured to receive a content including Electronic Program Guide, EPG, information;
a display unit (180) configured to display the received content;
a user interface unit (150) configured to receive a data input request during a display of the content; and
a controller (170) configured to perform control operations of displaying a text input window (1307) on the display unit (180) for inputting data and setting up a text input mode, when the data input request is received,
wherein the controller (170) is configured to extract text information from the received EPG information, tag predetermined numbers to the extracted text information and control the display unit (180) to display the EPG information including a plurality of blocks corresponding to the extracted text information with the tagged predetermined numbers, to set up the text input mode,
wherein the controller (170) is further configured to control the user interface unit (150) to receive a number key input signal for selecting one of the tagged predetermined numbers and control the display unit (180) to display text information corresponding to the received number key input signal in the text input window (1307),
wherein the controller (170) is configured to perform control operations of determining an importance level of each of the extracted text information based on user's text information usage frequency data stored in a storage unit (140) of the image display device (100), and tag a number in accordance with an order of the importance level, and
wherein the extracted text information includes at least one of a content name, a character name, an actor name, a content provider name, and a producer name.

8. The image display device (100) of claim 7, wherein the controller is configured to receive the number key input signal of the image display device (100) or a remote controller (200).

9. The image display device (100) of claim 7, wherein the data input request is triggered by executing a predetermined application.

10. The image display device (100) of claim 7, wherein the text input mode is set up, when a Hot Key input signal of the image display device (100) or a remote controller (200) is received.

11. The image display device (100) of claim 7, wherein the text includes a message.

## Patentansprüche

1. Texteingabeverfahren in einer Bildanzeigevorrichtung (100), umfassend:
Empfangen von Inhalten, darunter Electronic Program Guide, EPG, - Information;
Empfangen einer Dateneingabeanforderung während einer Ausgabe der empfangenen Inhalte;
Anzeigen eines Texteingabefensters (1307) zum Eingeben von Daten und Einrichten eines Texteingabemodus, wobei das Einrichten des Texteingabemodus umfasst, aus den empfangenen EPG-Information Textinformation zu extrahieren, die extrahierte Textinformation mit vorgegebenen Zahlen zu kennzeichnen und die EPG-Information einschließlich mehrerer Blöcke, die der extrahierten Textinformation entspricht, mit den kennzeichnenden vorgegebenen Zahlen anzuzeigen;
Empfangen eines Zifferntasten-Eingabesignals zum Auswählen einer der kennzeichnenden vorgegebenen Zahlen; und
Anzeigen der Textinformation, die dem empfangenen Zifferntasten-Eingabesignal entspricht, im Texteingabefenster (1307),
wobei das Kennzeichnen mit vorgegebenen Zahlen umfasst:
Bestimmen einer Wichtigkeitsstufe jeder der extrahierten Textinformation auf der Grundlage von Textinformations-Nutzungshäufigkeitsdaten des Benutzers, die in einer Speichereinheit (140) der Bildanzeigevorrichtung (100) gespeichert sind; und
Kennzeichnen mit einer Zahl entsprechend einer Ordnung der Wichtigkeitsstufe,
wobei die extrahierte Textinformation mindestens einen von einem Inhaltsnamen, einem Namen einer Persönlichkeit, einem Namen eines Darstellers, einem Namen eines Inhaltsanbieters und einem Namen eines Produzenten beinhalten.

2. Verfahren nach Anspruch 1, wobei das Empfangen des Zifferntasten-Eingabesignals umfasst:
Empfangen des Zifferntasten-Eingabesignals von der Bildanzeigevorrichtung (100) oder einer Fernsteuerung (200).

3. Verfahren nach Anspruch 1, wobei das Empfangen der Dateneingabeaufforderung umfasst:
Auslösen der Dateneingabeaufforderung durch Ausführen einer vorgegebenen Anwendung.

4. Verfahren nach Anspruch 1, wobei das Einrichten des Texteingabemodus umfasst:
Empfangen eines Hotkey-Eingabesignals von der Bildanzeigevorrichtung (100) oder einer Fernsteuerung (200); und
Einrichten des Texteingabemodus entsprechend dem empfangenen Hotkey-Eingabesignal.

5. Verfahren nach Anspruch 4, wobei der Schritt des Einrichtens des Texteingabemodus umfasst:
Bestimmen, ob ein gedrückter Zustand der Hotkey der Bildanzeigevorrichtung (100) oder der Fernbedienung (200) beibehalten wird; und
Einrichten des Texteingabemodus, während der gedrückte Zustand beibehalten wird.

6. Verfahren nach Anspruch 1, wobei der Text eine Nachricht beinhaltet.

7. Bildanzeigevorrichtung (100) mit einer Texteingabefunktion, wobei die Bildanzeigevorrichtung (100) umfasst:
eine Empfangseinheit (110), die dafür eingerichtet ist, Inhalte zu empfangen, darunter Electronic Program Guide, EPG, -Information;
eine Anzeigeeinheit (180), die dafür eingerichtet ist, die empfangenen Inhalte anzuzeigen;
eine Benutzerschnittstelleneinheit (150), die dafür eingerichtet ist, während einer Anzeige der Inhalte eine Dateneingabeanforderung zu empfangen; und
eine Steuerung (170), die dafür eingerichtet ist, Steuerungsvorgänge zum Anzeigen eines Texteingabefensters (1307) an der Anzeigeeinheit (180) zum Eingeben von Daten und Einrichten eines Texteingabemodus auszuführen, wenn die Dateneingabeanforderung empfangen wird,
wobei die Steuerung (170) dafür eingerichtet ist, aus der empfangenen EPG-Information Textinformation zu extrahieren, die extrahierte Textinformation mit vorgegebenen Zahlen zu kennzeichnen und die Anzeigeeinheit (180) derart zu steuern, dass die EPG-Information einschließlich mehrerer Blöcke, die der extrahierten Textinformation entspricht, mit den kennzeichnenden vorgegebenen Zahlen angezeigt werden, um den Texteingabemodus einzurichten,
wobei die Steuerung (170) ferner dafür eingerichtet ist, die Benutzerschnittstelleneinheit (150) derart zu steuern, dass sie ein Zifferntasten-Eingabesignal zum Auswählen einer der kennzeichnenden vorgegebenen Zahlen empfängt, und die Anzeigeeinheit (180) derart zu steuern, dass sie dem empfangenen Zifferntasten-Eingabesignal entsprechende Textinformation im Texteingabefenster (1307) anzeigt,
wobei die Steuerung (170) dafür eingerichtet ist, Steuerungsvorgänge zum Bestimmen einer Wichtigkeitsstufe jeder der extrahierten Textinformation auf der Grundlage von Textinformations-Nutzungshäufigkeitsdaten des Benutzers, die in einer Speichereinheit (140) der Bildanzeigevorrichtung (100) gespeichert sind, und zum Kennzeichnen mit einer Zahl entsprechend einer Ordnung der Wichtigkeitsstufe auszuführen, und
wobei die extrahierte Textinformation mindestens einen von einem Inhaltsnamen, einem Namen einer Persönlichkeit, einem Namen eines Darstellers, einem Namen eines Inhaltsanbieters und einem Namen eines Produzenten beinhalten.

8. Bildanzeigevorrichtung (100) nach Anspruch 7, wobei die Steuerung dafür eingerichtet ist, das Zifferntasten-Eingabesignal von der Bildanzeigevorrichtung (100) oder einer Fernbedienung (200) zu empfangen.

9. Bildanzeigevorrichtung (100) nach Anspruch 7, wobei die Dateneingabeanforderung durch Ausführen einer vorgegebenen Anwendung ausgelöst wird.

10. Bildanzeigevorrichtung (100) nach Anspruch 7, wobei der Texteingabemodus eingerichtet ist, wenn ein Hotkey-Eingabesignal von der Bildanzeigevorrichtung (100) oder einer Fernbedienung (200) empfangen wird.

11. Bildanzeigevorrichtung (100) nach Anspruch 7, wobei der Text eine Nachricht beinhaltet.

## Revendications

1. Procédé de saisie de texte dans un dispositif d'affichage d'image (100), comprenant :
recevoir un contenu comprenant des informations de guide électronique de programme, EPG ;
recevoir une requête de saisie de données durant une délivrance du contenu reçu ;
afficher une fenêtre de saisie de texte (1307) pour saisir des données et configurer un mode de saisie de texte, la configuration du mode de saisie de texte comprenant l'extraction d'informations de texte à partir des informations EPG reçues, l'étiquetage de numéros prédéterminés sur les informations de texte extraites et l'affichage des informations EPG comprenant une pluralité de blocs correspondant aux informations de texte extraites avec les numéros prédéterminés étiquetés ;
recevoir un signal de saisie de touche de numéro pour sélectionner l'un des numéros prédéterminés étiquetés ; et
afficher des informations de texte correspondant au signal de saisie de touche de numéro reçu dans la fenêtre de saisie de texte (1307),
dans lequel l'étiquetage de numéros prédéterminés comprend :
déterminer un niveau d'importance de chacune des informations de texte extraites sur la base de données de fréquence d'utilisation d'informations de texte de l'utilisateur stockées dans une unité de stockage (140) du dispositif d'affichage d'image (100) ; et
étiqueter un numéro conformément à un ordre du niveau d'importance,
les informations de texte extraites comprenant au moins l'un parmi un nom de contenu, un nom de personnage, un nom d'acteur, un nom de fournisseur de contenu et un nom de producteur.

2. Procédé selon la revendication 1, dans lequel la réception du signal de saisie de touche de numéro comprend :
recevoir le signal de saisie de touche de numéro du dispositif d'affichage d'image (100) ou d'une télécommande (200).

3. Procédé selon la revendication 1, dans lequel la réception de la requête de saisie de données comprend :
déclencher la requête de saisie de données par exécution d'une application prédéterminée.

4. Procédé selon la revendication 1, dans lequel la configuration du mode de saisie de texte comprend :
recevoir un signal de saisie de touche de raccourci du dispositif d'affichage d'image (100) ou d'une télécommande (200) ; et
configurer le mode de saisie de texte selon le signal de saisie de touche de raccourci reçu.

5. Procédé selon la revendication 4, dans lequel l'étape de configuration du mode de saisie de texte comprend :
déterminer si un état pressé de la touche de raccourci du dispositif d'affichage d'image (100) ou de la télécommande (200) est ou non maintenu ; et
configurer le mode de saisie de texte pendant que l'état pressé est maintenu.

6. Procédé selon la revendication 1, dans lequel le texte comprend un message.

7. Dispositif d'affichage d'image (100) ayant une fonction de saisie de texte, le dispositif d'affichage d'image (100) comprenant :
une unité de réception (110) configurée pour recevoir un contenu comprenant des informations de guide électronique de programme, EPG ;
une unité d'affichage (180) configurée pour afficher le contenu reçu ;
une unité d'interface utilisateur (150) configurée pour recevoir une requête de saisie de données durant un affichage du contenu ; et
un dispositif de commande (170) configuré pour réaliser des opérations de commande d'affichage d'une fenêtre de saisie de texte (1307) sur l'unité d'affichage (180) pour saisir des données et configurer un mode de saisie de texte, lorsque la requête de saisie de données est reçue,
le dispositif de commande (170) étant configuré pour extraire des informations de texte à partir des informations EPG reçues, étiqueter des numéros prédéterminés sur les informations de texte extraites et commander l'unité d'affichage (180) pour afficher les informations EPG comprenant une pluralité de blocs correspondant aux informations de texte extraites avec les numéros prédéterminés étiquetés, pour configurer le mode de saisie de texte,
le dispositif de commande (170) étant en outre configuré pour commander l'unité d'interface utilisateur (150) pour recevoir un signal de saisie de touche de numéro pour sélectionner l'un des numéros prédéterminés étiquetés et commander l'unité d'affichage (180) pour afficher des informations de texte correspondant au signal de saisie de touche de numéro reçu dans la fenêtre de saisie de texte (1307),
le dispositif de commande (170) étant configuré pour réaliser des opérations de commande de détermination d'un niveau d'importance de chacune des informations de texte extraites sur la base de données de fréquence d'utilisation d'informations de texte de l'utilisateur stockées dans une unité de stockage (140) du dispositif d'affichage d'image (100), et étiqueter un numéro conformément à un ordre du niveau d'importance, et
les informations de texte extraites comprenant au moins l'un parmi un nom de contenu, un nom de personnage, un nom d'acteur, un nom de fournisseur de contenu et un nom de producteur.

8. Dispositif d'affichage d'image (100) selon la revendication 7, dans lequel le dispositif de commande est configuré pour recevoir le signal de saisie de touche de numéro du dispositif d'affichage d'image (100) ou d'une télécommande (200).

9. Dispositif d'affichage d'image (100) selon la revendication 7, dans lequel la requête de saisie de données est déclenchée par exécution d'une application prédéterminée.

10. Dispositif d'affichage d'image (100) selon la revendication 7, dans lequel le mode de saisie de texte est configuré, lorsqu'un signal de saisie de touche de raccourci du dispositif d'affichage d'image (100) ou d'une télécommande (200) est reçu.

11. Dispositif d'affichage d'image (100) selon la revendication 7, dans lequel le texte comprend un message.
